# EUROPÄISCHE PATENTSCHRIFT

(11) **EP 2 399 313 B1**
(45) Veröffentlichungstag und Bekanntmachung des Hinweises auf die Patenterteilung: **29.05.2013**
(21) Anmeldenummer: 10701328.6
(22) Anmeldetag: 27.01.2010
(51) Int. Cl.: H01M 8/04, H01M 8/06

(54) **BRENNSTOFFZELLENSYSTEM MIT WENIGSTENS EINER BRENNSTOFFZELLE**
FUEL CELL SYSTEM COMPRISING AT LEAST ONE FUEL CELL
SYSTÈME DE PILE À COMBUSTIBLE COMPORTANT AU MOINS UNE PILE À COMBUSTIBLE

(30) Priorität: 19.02.2009 DE 102009009675
(43) Veröffentlichungstag der Anmeldung: 28.12.2011
(73) Patentinhaber: Daimler AG, 70327 Stuttgart (DE)
(72) Erfinder: KONRAD, Gerhard, 89081 Ulm (DE); STERK, Felix, 88281 Schlier (DE)
(74) Vertreter: JENSEN & SON
(86) Internationale Anmeldenummer: PCT/EP2010/000472
(87) Internationale Veröffentlichungsnummer: WO 2010/094390

(56) Entgegenhaltungen:
- EP-A2- 0 430 017
- WO-A2-03/052857
- WO-A2-2007/014127
- US-A1- 2005 019 633
- US-A1- 2005 058 863
- US-A1- 2006 251 939

## Beschreibung

Die Erfindung betrifft ein Brennstoffzellensystem mit wenigstens einer Brennstoffzelle, nach der im Oberbegriff von Anspruch 1 näher definierten Art.

Die DE 101 15 336 A1 zeit eine Brennstoffzellensystem mit einem Anodenkreislauf. Die Schrift beschäftigt sich dabei mit dem Umgang mit wasserstoffhaltigem Abgas, welches bei der Kreislaufführung der Anodengase von Zeit zu Zeit aus dem Bereich des Anodenkreislaufs abgegeben werden muss. Es wird dazu vorgeschlagen, das wasserstoffhaltige Gas in den Bereich der Zuluft zu dem Kathodenbereich der Brennstoffzelle einzubringen, so dass dieses zusammen mit dem Sauerstoff der Zuluft an einem Katalysator, insbesondere an dem im Bereich der Kathode ohnehin vorhandenen Katalysator abreagiert.

Dieses Eindosieren von wasserstoffhaltigem Abgas aus dem Anodenbereich der Brennstoffzelle wirkt sich hinsichtlich der bei der Reaktion entwickelten Temperatur negativ auf die Konditionierung der Zuluft zu dem Kathodenbereich der Brennstoffzelle aus. Wird die Reaktion außerdem im Bereich des Katalysators an den Zellen selbst zugelassen, so wird hierdurch eine schnellere Alterung der Brennstoffzellen bewirkt. Der Aufbau hat somit den Nachteil, dass er in seiner Nutzung sehr eingeschränkt ist, insbesondere auch hinsichtlich der umsetzbaren Menge an wasserstoffhaltigem Abgas, um die oben genannten Nachteile nicht zu groß werden zu lassen. Die Anwendung ist daher mit entscheidenden Nachteilen behaftet und, aufgrund der mengenmäßigen Beschränkung des wasserstoffhaltigen Abgases, um die Nachteile zu minimieren, auf die Verwendung in einem Aufbau mit einem Anodenrezirkulationskreislauf eingeschränkt. Ferner zeigt die US 2005/0019633 A1 ein Brennstoffzellensystem mit einem Anodenrezirkulationskreislauf. Bei diesem System wird das von Zeit zu Zeit aus dem Anodenkreislauf abgelassene Abgas mit Abgas aus dem Bereich der Kathode, im allgemeinen also Abluft, gemischt und in einem katalytischen Brenner verbrannt. Bei der katalytischen Verbrennung der entfeuchteten Abluft und des Abgases aus dem Anodenbereich entsteht eine entsprechende Wärmemenge, welche genutzt werden kann, um den Kühlkreislauf des Brennstoffzellensystems aufzuheizen.

Diese Betriebsführung stellt für den Kaltstart eines derartigen Brennstoffzellensystems sicherlich einen entsprechenden Vorteil dar, für den regulären Betrieb ist es jedoch sehr kritische diese Abwärme dem Kühlwasser zuzuführen, da die beispielsweise beim Einsatz in einem Fahrzeug zu Verfügung stehende Kühlfläche eher nicht oder nur schlecht ausreicht, um die Brennstoffzelle ausreichend zu kühlen. Außerdem wird bei dem Aufbau der US 2005/0019633 A1 die im Bereich des katalytischen Brenners entstehende Abwärme, außer für den Kaltstartfall, nicht aktiv genutzt.

Zum weiteren Stand der Technik wird auf die DE 10 2007 003 144 A1 verwiesen. Das dortige Brennstoffzellensystem umfasst eine Austauschvorrichtung, welche die beiden Funktionen "Kühlung" und "Befeuchtung" in sich kombiniert. Diese in der dortigen Schrift als Funktionseinheit bezeichnete Austauschvorrichtung lässt einen Stoffstrom von der Abluft der Brennstoffzelle zu der Zuluft zu der Brennstoffzelle zu, während gleichermaßen ein Wärmeaustausch von der durch eine Verdichtungsvorrichtung aufgeheizten Zuluft zu der vergleichsweise kühlen Abluft erfolgt. Die DE 10 2007 003 144 A1 zeigt dabei außerdem einen Aufbau, bei welchem die Luftversorgung des Brennstoffzellensystems über einen Verdichter realisiert wird, welcher von einer Turbine einerseits und/oder einem Elektromotor andererseits angetrieben werden kann. Dieser bei Brennstoffzellensystemen allgemein bekannte Aufbau wird auch als elektrischer Turbolader bezeichnet und erlaubt den zumindest unterstützenden Antrieb des Verdichters, und bei Leistungsüberschuss der elektrischen Maschine als Generator, durch die Turbine.

Es ist die Aufgabe der hier vorliegenden Erfindung, ein Brennstoffzellensystem dahingehend zu verbessern, dass eine Umsetzung von wasserstoffhaltigen Abgasen ebenso ermöglicht wird, wie die Erzeugung zusätzlicher Wärme, welche in dem Brennstoffzellensystem nutzbringend eingesetzt werden kann, und welches die oben genannten Nachteile vermeidet.

Erfindungsgemäß wird diese Aufgabe durch die Merkmale im kennzeichnenden Teil von Anspruch 1 gelöst.

Im erfindungsgemäßen Brennstoffzellensystem ist das katalytische Material also erfindungsgemäß in zwei verschiedene Einheiten aufgeteilt. Die Einheiten mit den katalytischen Material können dabei als eigenständige katalytische Komponenten ausgebildet sein, es ist jedoch auch denkbar diese in andere Komponenten, Rohrleitungen oder dergleichen zu integrieren. Die Aufteilung der katalytischen Einheit ist dabei erfindungsgemäß so, dass eine erste Einheit in Strömungsrichtung des Zuluftstroms vor wenigstens einer ersten der Brennstoffzelle vorgeschalteten Vorrichtung angeordnet ist. Dieser ersten katalytischen Einheit wird Abgas aus dem Anodenbereich zugeführt, welches in ihr mit Sauerstoff aus dem Zuluftstrom abreagieren kann. Die dabei entstehende Wärme, welche für die Brennstoffzelle selbst gegebenenfalls schädlich sein könnte, wird durch die Anordnung der ersten katalytischen Einheit vor einer weiteren Vorrichtung so in den Zuluftstrom eingebracht, dass diese in der Vorrichtung genutzt oder abgebaut werden kann. Zusätzlich ist in dem Brennstoffzellensystem eine zweite katalytische Einheit vorgesehen, welche sich im Abluftstrom aus dem Katodenbereich befindet. Diese katalytische Einheit kann insbesondere dazu genutzt werden, um durch zusätzlichen Brennstoff eine entsprechende Erhöhung der Temperatur des Abluftstroms zu erreichen, beispielsweise, um diese als thermische Energie zu nutzen, oder diese durch geeignete Vorrichtungen in eine andere Energieform zu wandeln.

Gemäß einer besonders günstigen Ausgestaltung des Brennstoffzellensystems, ist es vorgesehen, dass die wenigstens eine Vorrichtung als Wärmetauscher ausgebildet ist, in welchem Wärme von der Zuluft auf die Abluft übergeht. Durch diese Ausgestaltung der wenigstens einen Vorrichtung als Wärmetauscher, in diesem Fall als Ladeluftkühler, wird erreicht, dass die in der Zuluft vorliegende Wärme zusammen mit der Wärme, welche durch die erste katalytische Einheit eingetragen wird, auf die Abluft übertragen werden kann. Dadurch ist die Zuluft zu der Brennstoffzelle entsprechend kühl, und die Brennstoffzelle und hier insbesondere die im Bereich der Brennstoffzelle angeordneten Membranen werden nicht geschädigt.

In einer weiter sehr vorteilhaften Ausgestaltung der Erfindung ist es vorgesehen, dass die wenigstens eine Vorrichtung als Austauschvorrichtung ausgebildet ist, in welcher Wärme von der Zuluft auf die Abluft und Wasserdampf von der Abluft auf die Zuluft übergeht. Mit einer solchen Austauschvorrichtung, wie sie auch als Funktionseinheit für Kühlung und Befeuchtung aus dem Eingangs genannten Stand der Technik bekannt ist, wird das Brennstoffzellensystem hinsichtlich der Anzahl seiner Komponenten weiter vereinfacht. Da die Austauschvorrichtung eine vergleichbare Funktion wie der Ladeluftkühler mit integriert hat, treten beim Einsatz einer derartigen Austauschvorrichtung vergleichbare Vorteile auf, wie oben bereits erwähnt wurden.

Gemäß einer weiteren sehr vorteilhaften und günstigen Ausgestaltung des Brennstoffzellensystems ist es vorgesehen, dass die Zuluft über einen stromaufwärts der wenigstens einen Vorrichtung angeordneten Verdichter gefördert wird, wobei der Verdichter zumindest unterstützend durch eine Turbine antreibbar ist, welche von der Abluft stromabwärts der letzten wenigstens einen Vorrichtung durchströmt ist. Diese Turbine erlaubt es, die in der Abluft vorhandene Energie zu nutzen. Typischerweise werden heutige Brennstoffzellensysteme nur mit einem geringen Überdruck gegenüber der Umgebung betrieben. Der primäre Energieinhalt in der Abluft, welcher durch die Turbine genutzt werden kann, steckt deshalb in der Abwärme in dem Abluftstrom. Dadurch, dass über die zweite katalytische Einheit die Abwärme in dem Abluftstrom gezielt angehoben werden kann, kann über die Turbine diese Abwärme auch gezielt genutzt werden. Damit ist es möglich, durch die Turbine die in dem System anfallende Energie ideal zu nutzen, und beispielsweise bei einem schlagartigen Leistungsbedarf am Verdichter diesen über eine katalytische Umsetzung von zusätzlichem Brennstoff im Bereich der zweiten katalytischen Einheit und die Turbine bereitzustellen.

In einer weiteren sehr günstigen Ausgestaltung dieser Variante der Erfindung ist es ferner vorgesehen, dass der Verdichter von einer elektrischen Maschine antreibbar ist, wobei bei Leistungsüberschuss an der Turbine die Turbine die elektrische Maschine generatorisch zur Erzeugung von elektrischer Leistung antreibt. Die im Bedarfsfall über die zweite katalytische Einheit bereitgestellte Wärmeenergie kann also nicht nur über die Turbine genutzt werden, um den Verdichter zu treiben, sondern kann zielgerichtet auch eine elektrische Maschine als Generator antreiben. Damit kann die erzeugte Wärmeenergie in elektrische Energie umgewandelt werden, welche eine elektrische Leistungsanforderung befriedigen kann. Kommt es beispielsweise zu einer sprunghaften Steigerung der angeforderten Leistung, so kann die über die Turbine und die elektrische Maschine aus der heißen Abluft erzeugte elektrische Leistung das vergleichsweise träge Ansprechen der Brennstoffzelle auf eine derartige Leistungsanforderung überbrücken.

Das erfindungsgemäße Brennstoffzellensystem in allen sein dargelegten Varianten erlaubt somit einen einfachen, kompakten und damit auch kostengünstigen Aufbau, bei einer für die Lebensdauer und den erzielbaren Wirkungsgrad idealen Ausgestaltung. Das erfindungsgemäße Brennstoffzellensystem eignet sich daher besonders gut zur Verwendung in einem Fortbewegungsmittel, und hier zur Erzeugung von Leistung für den Antrieb und/oder elektrische Nebenverbraucher in dem Fortbewegungsmittel. Dabei ist unter einem Fortbewegungsmittel im Sinne der hier vorliegenden Erfindung jede Art von Fortbewegungsmittel zu Lande, zu Wasser oder in der Luft zu verstehen, wobei ein besonderes Augenmerk sicherlich in der Nutzung derartiger Brennstoffzellensysteme für schienenlose Kraftfahrzeuge liegt, ohne dass die Verwendung eines erfindungsgemäßen Brennstoffzellensystems hierauf eingeschränkt wäre.

Weitere vorteilhafte Ausgestaltungen des erfindungsgemäßen Brennstoffzellensystems ergeben sich aus den restlichen Unteransprüchen und werden anhand der Ausführungsbeispiele deutlich, welche nachfolgend unter Bezugnahme auf die Figuren näher beschrieben werden.

Dabei zeigen:
- Fig. 1: eine mögliche Ausführungsform des erfindungsgemäßen Brennstoffzellensystems;
- Fig. 2: eine weitere mögliche Ausführungsform des erfindungsgemäßen Brennstoffzeitensystems:
- Fig. 3: eine alternative Ausführungsform des erfindungsgemäßen Brennstoffzellensystems; und
- Fig. 4: eine weitere alternative Ausführungsform des erfindungsgemäßen Brennstoffzellensystems.

Die Darstellung in den folgenden Figuren zeigt von dem an sich sehr komplexen Brennstoffzellensystem lediglich die für das Verständnis der hier vorliegenden Erfindung notwendigen Bauteile in einer stark schematisierten Darstellung. Es sollte dabei für das Brennstoffzellensystem selbstverständlich sein, dass auch weitere Komponenten, wie beispielsweise ein Kühlkreislauf und dergleichen in dem Brennstoffzellensystem vorgesehen sind, obwohl diese in den nachfolgend dargestellten Figuren keine Berücksichtigung finden.

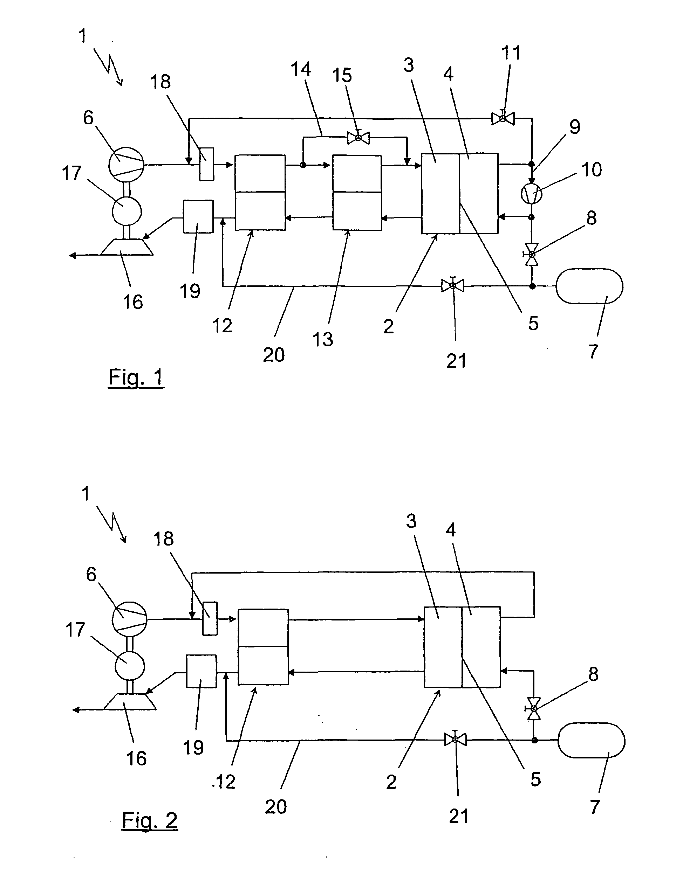

In Figur 1 ist nun ein Brennstoffzellensystem 1 mit einer Brennstoffzelle 2 dargestellt. Die Brennstoffzelle 2 soll als in üblicher Art und Weise aufgebaute Brennstoffzelle 2 aus einem Stapel von Einzelzellen bestehen. In der Brennstoffzelle 2 ist ein Kathodenbereich 3 und ein Anodenbereich 4 ausgebildet, welche im vorliegenden Beispiel einer PEM-Brennstoffzelle 2 durch eine Membran 5 aus einem Polymerelektrolyt (PE) voneinander getrennt sind. In dem in Figur 1 dargestellten Ausführungsbeispiel wird dem Kathodenbereich 3 über einen Verdichter 6 ein Zuluftstrom zugeführt. Der Verdichter 6 kann dabei beispielsweise als Schraubenverdichter oder als Strömungsverdichter ausgeführt sein, wie dies bei Brennstoffzellensystemen üblich ist. Grundsätzlich sind jedoch auch andere Möglichkeiten zum Verdichten des zugeführten Luftstroms, beispielsweise durch eine Kolbenmaschine oder dergleichen, denkbar. Der dem Kathodenbereich 3 zugeführte Zuluftstrom reagiert in der Brennstoffzelle 2 mit dem Anodenbereich 4 zugeführten Wasserstoff zu Wasser, wobei elektrische Leistung frei wird. Dieses an sich bekannte Prinzip der Brennstoffzelle 2 spielt für die vorliegende Erfindung nur eine untergeordnete Rolle, weshalb dies nicht näher erläutert werden soll.

Dem Anodenbereich 4 wird in dem hier dargestellten Ausführungsbeispiel Wasserstoff aus einer Wasserstoffspeichereinrichtung 7, beispielsweise einem Druckgasspeicher und/oder einem Hydridspeicher zugeführt. Prinzipiell wäre es auch denkbar, die Brennstoffzelle 2 mit einem wasserstoffhaltigen Gas zu versorgen, welches beispielsweise aus kohlenwasserstoffhaltigen Ausgangsstoffen im Bereich des Brennstoffzellensystems generiert wird. In dem Ausführungsbeispiel der Figur 1 wird der Wasserstoff aus der Wasserstoffspeichereinrichtung 7 über eine hier nur schematisch angedeutete Dosiervorrichtung 8 in den Anodenbereich 4 geleitet. Das aus dem Anodenbereich 4 abströmende Abgas, welches im Allgemeinen immer noch eine vergleichsweise große Menge an Wasserstoff enthält, wird über eine Rezirkulationsleitung 9 sowie eine Rezirkulationsfördereinrichtung 10 in den Anodenbereich 4 zurückgeführt. Im Bereich dieser Rezirkulation wird dabei frischer aus der Wasserstoffspeichereinrichtung 7 stammender Wasserstoff zugeführt, so dass im Anodenbereich 4 immer eine ausreichende Menge an Wasserstoff zur Verfügung steht. Der Aufbau des Anodenbereichs 4 der Brennstoffzelle 2 mit der Rezirkulationsleitung 9 und der Rezirkulationsfördereinrichtung 10 ist dabei an sich bekannt und üblich. Als Rezirkulationsfördereinrichtung 10 kann z. B. eine Gasstrahlpumpe zum Einsatz kommen, welche von dem frischen aus der Wasserstoffspeichereinrichtung 7 stammenden Wasserstoff angetrieben wird. Alternativ dazu wäre auch ein Rezirkulationsgebläse als Rezirkulationsfördereinrichtung 10 denkbar. Selbstverständlich sind auch Kombinationen dieser verschiedenen Fördereinrichtungen möglich, welche ebenfalls unter die Definition der Rezirkulationsfördereinrichtung 10 gemäß der hier vorliegenden Beschreibung fallen. Außerdem ist es beim Einsatz einer Rezirkulation von Anodenabgas bekannt, dass sich im Bereich der Rezirkulationsleitung 9 mit der Zeit inerte Gase, wie beispielsweise Stickstoff ansammeln, welche durch die PE-Membran 5 hindurch von dem Kathodenbereich 3 in den Anodenbereich 4 gelangen. Um in dem Anodenbereich 4 weiterhin eine ausreichende Konzentration an Wasserstoff zur Verfügung stellen zu können, ist es daher notwendig, das Abgas des Anodenbereichs 4 in der Rezirkulationsleitung 9 von Zeit zu Zeit abzulassen. Hierfür ist in dem Ausführungsbeispiel gemäß Figur 1 ein Ablassventil 11 vorgesehen, durch welches das Abgas aus dem Anodenbereich 4 von Zeit zu Zeit abgeführt werden kann. Dieser Vorgang wird häufig auch als "Purge" bezeichnet. Das Abgas beziehungsweise Purgegas enthält dabei neben den inerten Gasen immer auch eine entsprechende Menge an Restwasserstoff.

Die von dem Verdichter 6 zum Kathodenbereich 3 strömende Zuluft durchströmt in dem Aufbau des Brennstoffzellensystems 1 gemäß Figur 1 zuerst einen Wärmetauscher 12 als erste Vorrichtung, welcher dazu dient, die in ihn einströmende heiße Zuluft aus dem Verdichter 6 entsprechend zu kühlen. Hierfür wird der Wärmetauscher 12 abluftseitig von der kühlen Abluft aus dem Kathodenbereich 3 der Brennstoffzelle 2 durchströmt. Der Wärmetauscher 12 wird üblicherweise auch als Ladeluftkühler bezeichnet. Nachdem die Zuluft den Wärmetauscher 12 durchströmt hat, gelangt sie in einen Befeuchter 13, in welchem die trockene und nunmehr abgekühlte Zuluft von der feuchten Abluft des Kathodenbereichs 3, welche den größten Teil des in der Brennstoffzelle 2 entstehenden Produktwassers als Wasserdampf mit sich führt, befeuchtet wird. Hierfür ist der Befeuchter 13 in einer üblichen Ausgestaltung mit für Wasserdampf durchlässigen Membranen ausgestattet, welche auf der einen Seite von der trockenen Zuluft und auf der anderen Seite von der feuchten Abluft durchströmt werden. Außerdem ist in der Darstellung der Figur 1 eine Bypassleitung 14 mit einer Ventileinrichtung 15 dargestellt, durch welche der Befeuchter 13 von der Zuluft zu dem Kathodenbereich 3 umströmt werden kann. Der Sinn dieser aus dem Stand der Technik an sich bekannten Bypassleitung 14 mit der Ventileinrichtung 15 liegt nun darin, dass die Ventileinrichtung 15 entweder als Proportionalventil den Querschnitt der Bypassleitung 14 steuert oder auch als getaktetes Ventil den Durchfluss durch die Bypassleitung 14 entsprechend steuert. Bei komplett verschlossener Bypassleitung 14 wird die gesamte Zuluft durch den Befeuchter 13 strömen und somit die maximal mögliche Feuchte aufnehmen. Ist dies aus betriebsstrategischen Gründen der Brennstoffzelle 2 nicht gewollt, beispielsweise für den Kaltstartfall oder bei einer absinkenden Leistungsanforderung an die Brennstoffzelle 2 aber noch entsprechend hohem feuchtem Abluftstrom, so kann ein Teil der Zuluft durch die Bypassleitung 14 um den Befeuchter 13 herumgeleitet werden. Bevor die Zuluft in den Kathodenbereich 3 der Brennstoffzelle 2 eintritt, vermischt sich diese über die Bypassleitung 14 geführte Zuluft wieder mit der durch den Befeuchter 13 geführten Zuluft. Die Feuchte in der in den Kathodenbereich 3 einströmenden Zuluft kann so entsprechend eingestellt werden. Wie aus dem Stand der Technik bekannt, könnte die Bypassleitung 14 alternativ dazu auch abluftseitig um den Befeuchter 13 herum angeordnet sein.

In dem Brennstoffzellensystem 1 der Figur 1 ist außerdem eine Turbine 16 sowie eine elektrische Maschine 17 zu erkennen. Die elektrische Maschine 17 kann als Motor den Verdichter 6 antreiben. Sie kann beispielsweise auf einer Welle mit dem Verdichter angeordnet sein, oder könnte auch mittelbar über ein entsprechendes Getriebe oder dergleichen mit dem Verdichter 6 gekoppelt sein. Vergleichbar hierzu ist die elektrische Maschine 17 und der Verdichter 6 mit der Turbine 16 direkt oder mittelbar gekoppelt. In der Turbine 16 wird nun die Abluft entspannt. Dabei gibt die Abluft thermische Energie und Druckenergie in der Turbine 16 ab. Die so von der Turbine 16 bereitgestellte Leistung kann genutzt werden, um den Verdichter 6 zumindest unterstützend anzutreiben. Bei einem entsprechenden Leistungsüberschuss an der Turbine 16 kann außerdem die elektrische Maschine 17 als Generator angetrieben werden. Über die elektrische Maschine 17 kann dann ein entsprechender Strom bereitgestellt werden, welcher für anderweitige Anwendungen in dem Brennstoffzellensystem 1 oder auch in einem durch das Brennstoffzellensystem 1 versorgten elektrischen System, beispielsweise dem Antriebssystem eines Fahrzeugs, genutzt werden kann.

Der bisher beschriebene Aufbau des Brennstoffzellensystems entspricht dabei einem aus dem Stand der Technik so bekannten Bennstoffzellensystem, welches in vergleichbarer Funktion arbeitet, wie analog aufgebaute Brennstoffzellensysteme 1 aus dem Stand der Technik.

Der entscheidende Unterschied des Brennstoffzellensystems 1 gegenüber dem Stand der Technik liegt nun darin, dass in dem Brennstoffzellensystem 1 zwei Einheiten 18, 19 vorgesehen sind, welche jeweils ein katalytisches Material zur thermischen Umsetzung eines brennstoffhaltigen Gases aufweisen. Die Einheiten 18, 19 werden daher im nachfolgenden Text auch als katalytische Einheiten 18, 19 bezeichnet. Die erste katalytische Einheit 18 ist im Zuluftstrom zu dem Kathodenbereich 3 der Brennstoffzelle 2 angeordnet. Der ersten katalytischen Einheit 18 oder der Zuluft in Strömungsrichtung vor der ersten katalytischen Einheit 18 wird nun das aus dem Anodenbereich 4 stammende Abgas, in dem hier dargestellten Ausführungsbeispiel das Abgas aus dem . Anodenkreislauf über die Ventileinrichtung 11 von Zeit zu Zeit, zugeführt. Im Bereich der ersten katalytischen Einheit 18 reagiert der in diesem Abgas enthaltene Wasserstoff mit Sauerstoff aus der vom Verdichter 6 geförderten Zuluft. Dabei entstehen Wärme und Wasser in Form von Wasserdampf. Die zusätzliche Erwärmung des Zuluftstroms ist an der Stelle, an der die katalytische Einheit 18 angeordnet ist, vergleichsweise unkritisch, da in Strömungsrichtung nach der ersten katalytischen Einheit 18 die Zuluft ohnehin über den Wärmetauscher 12 durch die Abluft gekühlt wird. Der bei der katalytischen Umsetzung im Bereich der ersten katalytischen Einheit 1.8 entstehende Wasserdampf ist an dieser Stelle ein Vorteil, da er die heiße und trockene Zuluft aus dem Verdichter befeuchtet. Aufgrund der bei einem Betrieb mit Anodenkreislauf sehr geringen Menge an Restwasserstoff, wird diese Befeuchtung sicherlich nicht ausreichen, sie kann jedoch die in dem Befeuchter 13 stattfindende Befeuchtung vorteilhaft unterstützen.

Die zweite katalytische Einheit 19 ist im Abluftstrom aus dem Kathodenbereich 3 der Brennstoffzelle 2 angeordnet, und zwar in Strömungsrichtung der Abluft nach dem Wärmetauscher 12. Dieser zweiten katalytischen Einheit 19 beziehungsweise der Abluft in einem Bereich vor der zweiten katalytischen Einheit 19 ist über ein Leitungselement 20 und eine Ventileinrichtung 21 nun ebenfalls Wasserstoff als Brennstoff zuführbar. Anstelle von Wasserstoff könnte grundsätzlich auch ein anderer Brennstoff zum Einsatz kommen, falls dieser in dem Brennstoffzellensystem verfügbar wäre, beispielsweise ein kohlenwasserstoffhaltiger Brennstoff, wenn ein wasserstoffhaltiges Gas für das Brennstoffzellensystem aus einem solchen Ausgangsstoff durch eine Gaserzeugungseinrichtung erzeugt werden würde.

Mit dem zusätzlich zugeführten Brennstoff beziehungsweise Wasserstoff kann die Abluft, welche nach dem Durchströmen des Wärmetauschers 12 ohnehin eine vergleichsweise hohe Temperatur aufweist, nun durch die katalytische Einheit 19 nochmals weiter erwärmt werden. Dies kann beispielsweise genutzt werden, um den Austritt von flüssigem Produktwasser aus dem Brennstoffzellensystem 1 zu vermeiden und sämtliches in der Abluft befindliches Wasser zu verdampfen. Insbesondere kann die zusätzliche Erwärmung der Abluft über die katalytische Einheit 19 jedoch genutzt werden, um die Turbine 16 mit zusätzlicher Leistung zu versorgen. Da das Druckniveau in heutigen Brennstoffzellensystemen nur noch wenige bar über den Umgebungsdruck liegt, spielt die Nutzung der Abwärme bei der Erzeugung von Leistung durch die Turbine 16 ohnehin die größere Rolle. Wird nun über die katalytische Einheit 19 zusätzliche Wärme in den Abluftstrom eingebracht, so kann diese entscheidend zur Leistungsabgabe der Turbine 16 beitragen. Insbesondere kann in bestimmten Betriebssituationen über die Turbine 16 ein verstärkter Antrieb des Verdichters 6 erfolgen, beispielsweise, wenn eine hohe elektrische Leistungsanforderung schlagartig an die Brennstoffzelle 2 gerichtet wird, und diese dementsprechend eine hohe Menge an Zuluft benötigt, während die die Turbine 16 treibende Abluft noch mit einem vergleichsweise geringe Volumenstrom vorliegt. Dann kann über den zusätzlichen Eintrag von thermischer Energie über die katalytische Einheit 19 die erhöhte Leistungsanforderung über die Turbine bereitgestellt werden. Auch ist es denkbar, durch die Turbine 16 in solchen Situationen so viel Leistung bereitzustellen, dass diese über die elektrische Maschine 17, welche dann als Generator arbeitet, zusätzliche elektrische Leistung bereitstellen kann. Ein solcher Boostbetrieb kann beispielsweise genutzt werden, um das eher träge elektrische Ansprechen der Brennstoffzelle 2 zu unterstützen oder zu überbrücken. Bei der Verwendung des Brennstoffzellensystems 1 in einem Fortbewegungsmittel könnte diese zusätzlich bereitgestellte Leistung beispielsweise zur Unterstützung einer schnellen Beschleunigung über einen elektrischen Antrieb eingesetzt werden.

Die Aufbauten der Brennstoffzellensysteme in den nachfolgenden Figuren sind nun im wesentlichen vergleichbar oder analog zu dem Aufbau des Brennstoffzellensystems 1 in der Figur 1 zu verstehen. Daher werden bei der Beschreibung der nachfolgenden Figuren für die selben Bauteile die selben Bezugszeichen verwendet und es wird bei der Figurenbeschreibung nur auf die Unterschiede und erfindungsgemäßen Weiterbildung im Hinblick auf die vorhergehenden Figuren detailliert eingegangen.

Der Aufbau des Brennstoffzellensystems 1 in Figur 2 weist im Gegensatz zu dem Brennstoffzellensystem 1 in Figur 1 nun keinen Befeuchter 13 und damit auch keine Bypassleitung 14 um diesen Befeuchter auf. Außerdem wird der Anodenbereich 4 der Brennstoffzelle 2 in dem Brennstoffzellensystem 1 der Figur 2 nicht mit einem Anodenkreislauf betrieben, sondern wird kontinuierlich von Wasserstoff aus der Wasserstoffspeichereinrichtung 7 durchströmt. Um einen möglichst guten Umsatz des in den Anodenbereich 4 strömenden Wasserstoffs zu gewährleisten kann der Anodenbereich 4 dabei kaskadierend aufgebaut sein. Dieser aus der Stand der Technik bekannte Aufbau ist dabei so ausgeführt, dass der Anodenbereich 4 in verschiedene aktive Teilbereiche unterteilt ist, wobei die in Strömungsrichtung des Wasserstoffs aufeinander folgenden Teilbereiche jeweils eine kleinere aktive Fläche aufweisen, als die in Strömungsrichtung davor liegenden Teilbereiche. Damit wird erreicht, dass trotz abreagierendem Wasserstoff die zu Verfügung gestellte aktive Fläche der Teilbereiche jeweils zu dem noch verbleibenden Volumenstrom des Wasserstoffs passt, und somit keine unnötige aktive Fläche vorgehalten werden muss. Bei einem solchen Aufbau des Anodenbereichs 4 der Brennstoffzelle 2 ist es möglich, diesen mit einem sehr geringen Überschuss an Wasserstoff von circa 3-5 % zu betreiben. Dieser Restwasserstoff strömt dann ebenso kontinuierlich wie der frische Wasserstoff dem Anodenbereich 4 zuströmt als Abgas aus dem Anodenbereich 4. In dem Brennstoffzellensystem 1 der Figur 2 gelangt dieses Abgas nun analog zu dem Abgas aus dem Anodenloop der Figur 1 in die Zuluft, und zwar in Strömungsrichtung vor der ersten katalytischen Einheit 18. Das Abgas beziehungsweise der Restwasserstoff aus dem das Abgas größtenteils besteht, kann dann im Bereich der ersten katalytischen Einheit 18 mit Sauerstoff aus dem Zuluftstrom reagieren. Dabei wird, wie oben bereits erwähnt, Wärme und Wasser in Form Wasserdampf entstehen. Die Wärme wird wiederum über den Wärmetauscher 12 weggekühlt, der Wasserdampf gelangt in den Katodenbereich 3 der Brennstoffzelle 2 und befeuchtet dort die PE-Membranen 5. Da in dem Brennstoffzellensystem 1 der Figur 2 ein kontinuierlicher Wasserstoffstrom zu dem Bereich der ersten katalytischen Einheit 18 stattfindet, entsteht in dieser auch kontinuierlich Wasserdampf. Daher kann bei geeigneter Auslegen des Systems auf eine zusätzliche Befeuchtung des Zuluftstroms verzichtet werden.

Die erste katalytische Einheit 18 kann dabei als eigenständige Komponente ausgebildet sein, wie dies in der Figur 2 dargestellt ist, es wäre jedoch auch denkbar die zweite katalytische Einheit als einen Bereich des Wärmetauschers 12 auszubilden, insbesondere den in Strömungsrichtung der Zuluft eingangsseitigen Bereich. Dies hätte den zusätzlichen Vorteil, dass die in der katalytischen Einheit 18 entstehende Wärme nicht nur über den Zuluftstrom durch den Wärmetauscher 12 auf den Abluftstrom übertragen werden würde, sondern, dass bei einer entsprechenden Anordnung des katalytischen Materials in dem Wärmetauscher 12, beispielsweise einer Beschichtung oder einer teilweisen Beschichtung der Wärmetauscherplatten, falls der Wärmetauscher 12 als Plattenwärmetauscher ausgebildet ist, entstehende Wärme auch direkt auf den Abluftstrom übertragen werden kann, so dass die zur Verfügung stehende Abwärme in dem Abluftstrom vergrößert und gleichzeitig die Temperatur des Zuluftstroms reduziert werden kann.

Der Aufbau des Brennstoffzellensystems 1 der Figur 2 ist auf der Abluftseite dabei identisch mit dem Aufbau, wie er in Figur 1 bereits beschrieben wurde.

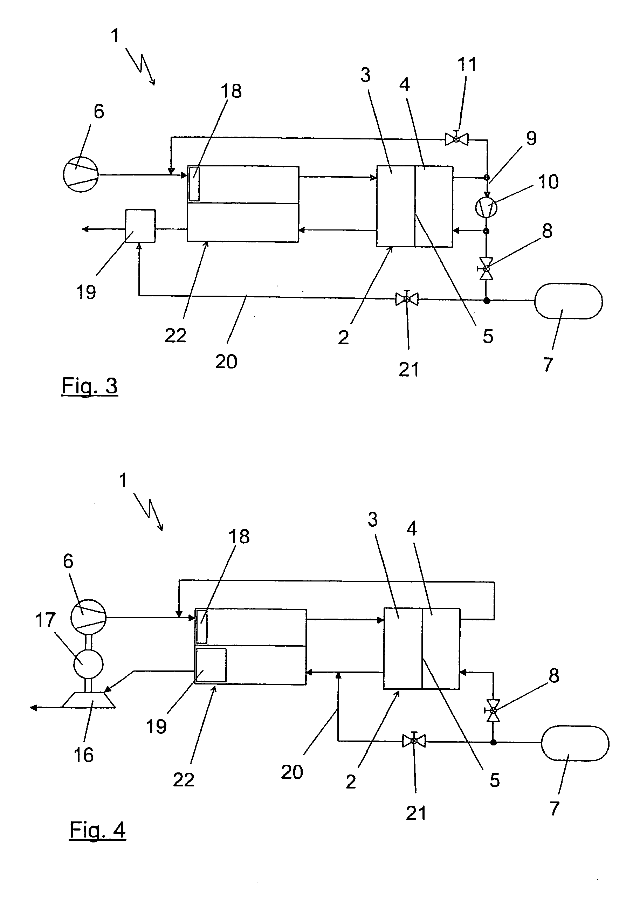

Das Brennstoffzellensystem 1 der Figur 3 weist nun wieder eine Anodenrezirkulationsleitung 9 sowie eine Rezirkulationsfördervorrichtung 10 auf. Das Abgas aus dem Anodenbereich 4 wird in diesem Ausführungsbeispiels also wieder von Zeit zu Zeit über die Ventileinrichtung 11 abgelassen. Ansonsten ist in dem Brennstoffzellensystem 1 der Figur 3 auf die Turbine 16 sowie die Darstellung der elektrischen Maschine 17 verzichtet worden, da diese für das erfindungsgemäße Brennstoffzellensystem 1 ebenfalls nicht notwendig sind. Der Wärmetauscher 12 und der Befeuchter 13 sind in dem Brennstoffzellensystem 1 der Figur 3 dabei zu einer einzigen Funktionseinheit, einer nachfolgend als Austauschvorrichtung 22 bezeichneten Einheit zusammengeführt. Diese Austauschvorrichtung 22 sorgt dabei sowohl für den Stoffaustausch des Wasserdampfs von der Abluft auf die Zuluft, als auch für die Wärmeübertragung von der durch den Verdichter 6 erhitzen Zuluft auf die Abluft. Eine solche Austauschvorrichtung ist aus dem Stand der Technik prinzipiell bekannt, hierfür wird auf die Eingangs bereits genannte DE 10 2007 003 114 A1 verwiesen.

In dem Brennstoffzellensystem 1 der Figur 3 ist außerdem die erste katalytische Einheit 18 in die Austauschvorrichtung 22 integriert. Dies kann beispielsweise durch ein Beschichten, insbesondere eines Teilbereichs, der Zuluftseite der Austauschvorrichtung 22 erfolgen, in etwa analog, wie dies auch bei der Integration in den Wärmetauscher, welche oben bereits beschrieben wurde, durchgeführt werden kann. In einer besonders günstiger Ausgestaltung ist die Austauschvorrichtung 22 im Gegenstrom oder zumindest zu einem großen Teil im Gegenstrom betrieben. Dies hat den Vorteil, dass die feuchte und kalte Abluft in der Austauschvorrichtung 22 zuerst mit der schon vergleichsweise stark abgekühlten und etwas befeuchteten Zuluft in Berührung kommt. Mit dem Durchströmen der Austauschvorrichtung 22 kommt die Abluft dann zunehmend mit trockenerer und heißerer Zuluft in Kontakt, so dass diese Wärme aufnehmen und Wasserdampf an die Zuluft abgeben kann. Erst kurz bevor die Abluft die Austauschvorrichtung 22 verlässt, kommt sie auch in den Kontakt mit der, durch das katalytische Material in der ersten katalytischen Einheit 18 erzeugten Abwärme und nimmt diese bei relativ hoher Temperatur vorliegende Abwärme auf, bevor sie die Austauschvorrichtüng 22 verlässt. Der Bereich mit dem katalytischen Material, also der Bereich der integrierten ersten katalytischen Einheit 18 kann dabei vergleichsweise klein ausgebildet werden, beispielsweise circa 1/16 bis 1/8 der zur Verfügung stehenden zuluftseitigen Fläche der Austauschvorrichtung 22, da hier eher wenig Wasserstoff anfällt.

In einer besonders günstigen Ausgestaltung kann die Austauschvorrichtung 22 aus einem Wabenmaterial bestehen, beispielsweise einem keramischen Wabenkörper, wie er für Abgaskatalysatoren eingesetzt wird. Dieser Wabenkörper kann so ausgebildet sein, dass die einzelnen nebeneinander liegenden Kanäle von der Zuluft und der Abluft im Gegenstrom durchströmt werden. Durch eine entsprechende Beschichtung kann dafür gesorgt werden, dass zumindest in Teilbereichen Wasserdampf von der Abluftseite auf die Zuluftseite gelangen kann, und das zumindest in gegebenenfalls anderen Teilbereich ein Wärmeaustausch zwischen den Stoffen erfolgt. Außerdem kann die Zuluftseite mit einer entsprechend katalytischen Beschichtung, beispielsweise auch nur in einem Teilbereich versehen werden. Die Zufuhr des Abgases aus dem Anodenbereich 4 kann dabei wie bisher bereits beschrieben direkt in die Zuluft nach dem Verdichter 6 erfolgen. Es wäre jedoch auch denkbar, dass Abgas unmittelbar in die Austauschvorrichtung 22 und hier insbesondere in den Bereich der ersten katalytischen Einheit 18 einzubringen.

Abluftseitig unterscheidet sich das Brennstoffzellensystem 1 in der Ausgestaltung gemäß Figur 3 nur gering von den vorher beschriebenen Ausführungsbeispielen. So weist das Brennstoffzellensystem hier keine Turbine auf, so dass in der zweiten katalytischen Einheit 19 erzeugte thermische Energie lediglich zum Verdampfen des Produktwasser in der Abluft genutzt werden kann, oder zum Einsatz als thermische Energie beispielsweise für eine Beheizung eines Fahrzeuginnenraums, eines Kühlkreislaufes oder dergleichen.

Der Aufbau des Brennstoffzellensystems 1 in der Figur 4 weist nun wieder die Einheit aus Verdichter 6, elektrischer Maschine 17 und Turbine 16 auf, er würde sich also wieder zum Einsatz mit einem Boostbetrieb eignen, wie dies im Rahmen der Darstellung der Figur 1 bereits beschrieben wurde. Ansonsten zeigt auch das Brennstoffzellensystem 1 in der Ausgestaltung gemäß Figur 4 wieder die Austauschvorrichtung 22 an Stelle eines Wärmetauschers und/oder eines Befeuchters. Allerdings ist in Analogie zu Figur 2 der Anodenbereich 4 nicht mit einer Rezirkulationsleitung 9 versehen. Damit liegt auch bei dem Brennstoffzellensystem 1 in der Ausgestaltung gemäß Figur 4 ein kontinuierlicher Abgasstrom aus dem Anodenbereich 4 vor. Dieser wird wieder analog zur Ausgestaltung der Figur 2 der ersten katalytischen Einheit 18 zugeführt, welche hier wiederum in die Austauschvorrichtung 22 integriert ausgebildet ist.

Der eigentliche Unterschied des Brennstoffzellensystems 1 in der Ausgestaltung gemäß Figur 4 liegt nun auf der Abluftseite. Dabei ist die zweite katalytische Einheit 19 ebenfalls mit in die Austauschvorrichtung 22 integriert. Sie befindet sich in Strömungsrichtung der Abluft im Bereich, in dem die Abluft aus der Austauschvorrichtung 22 abströmt. Dies hat den Vorteil, dass durch die katalytische Einheit 19 eine starke Erhitzung der Abluft erfolgt, welche dann beispielsweise in der Turbine 16 wie in Figur 4 dargestellt genutzt werden kann. Die im Bereich der katalytischen Einheit 19 entstehende Abwärme kann bei dieser Anordnung im Ausströmbereich der Abluftseite damit primär zur Erwärmung der Abluft genutzt werden. Der Wärmeübergang in den Bereich der Zuluftseite kann somit möglichst gering gehalten werden. Dies kann außerdem dadurch unterstützt werden, dass im Bereich der katalytischen Einheit 19 in der Austauschvorrichtung 22 geeignete Mittel vorgesehen sind, um den Wärmeübergang in den Bereich der Zuluft zu verhindern oder zumindest zu erschweren. Derartige Mittel könnten beispielsweise eine Ausgestaltung mit schlecht wärmeleitenden Materialien oder gegebenenfalls ein Luftspalt zwischen den beiden Seiten im Bereich der katalytischen Einheit 19 sein. Die von der ebenfalls vorhandenen und in die Austauschvorrichtung 22 integrierten katalytischen Einheit 18 erzeugte Wärme müsste in diesem Fall dann wieder über die Zuluft auf die Abluft übertragen werden, da eine derartige Anordnung den direkten Kontakt und die direkte Übertragung der Wärme auf die Abluft ebenfalls behindern würde. Da typischerweise die katalytische Einheit 19 jedoch deutlich größer ausgeführt ist, als die katalytische Einheit 18 und damit aus dem zugeführten Brennstoff und dem in der Abluft vorhandenen Sauerstoff eine vergleichsweise große Wärmemenge im Vergleich zur Umsetzung des Abgases aus dem Anodenbereich generiert wird, ist dies akzeptabel.

Der Aufbau der Figur 4 erlaubt es somit mit einer einzigen Baueinheit, nämlich der Austauschvorrichtung 22 mit den beiden integrierten katalytischen Einheiten 18, 19 das Abgas aus dem Anodenbereich 4 zu nutzen, ohne damit die Brennstoffzelle 2 selbst unnötig zu belasten oder ihre Alterung zu beschleunigen und außerdem die Zululuft zur Brennstoffzelle 2 ideal zu konditionieren. Ferner kann über die zweite katalytische Einheit 19 und die aus der heißen Zuluft auf die Abluft übertragene Wärme eine sehr hohe Wärmemenge in der Abluft realisiert werden, welche den Betrieb der Turbine 16, beispielsweise zum Antreiben des Verdichters und/oder um einen Generator anzutreiben zulässt. Die Zufuhr des Wasserstoffs als zusätzlicher Brennstoff erfolgt in dem hier dargestellten Ausführungsbeispiel in die Abluft nach dem Katodenbereich 3 der Brennstoffzelle 2. Grundsätzlich wäre es jedoch auch möglich, diesen Brennstoff direkt in den Bereich der zweiten katalytischen Einheit 19 einzubringen. Da die Austauschvorrichtung 22 jedoch typischer Weise sehr komplex aufgebaut sein wird, ist die Zufuhr der Inhaltsstoffe in die Gaszuführungen, in denen dies beispielsweise durch ein T-Stück oder durch die Verbindung von zwei Leitungen erfolgen kann, im Allgemeinen aus Gründen der Komplexität und aus Kostengründen zu bevorzugen.

Dabei ist es selbstverständlich, dass die hier dargestellten Ausführungsvarianten des erfindungsgemäßen Aufbaus beliebig untereinander kombiniert werden können, es könnte also beispielsweise nur eine oder keine der katalytischen Einheiten in einen Wärmetauscher, oder einen Austauschvorrichtung integriert werden. Das Brennstoffzellensystem könnte mit oder ohne Turbine und mit oder ohne Befeuchter ebenso betrieben werden, wie mit oder ohne die Kreislaufführung des Wasserstoffs um den Anodenbereich. Außerdem wäre es selbstverständlich auch denkbar, dass eine Bypassleitung 14 mit einer entsprechenden Ventileinrichtung 15 zuluftseitig oder abluftseitig um die Austauschvorrichtung 22 herum angeordnet wird, um auch hier die Befeuchtung bei Bedarf entsprechend steuern zu können.

## Patentansprüche

1. Brennstoffzellensystem (1) mit wenigstens einer Brennstoffzelle (2), welche einen Kathodenbereich (3) und einen Anodenbereich (4), welche durch eine Membran (5) aus Polymerelektrolyt voneinander getrennt sind, aufweist, mit wenigstens einer Vorrichtung (12,13,22), welche von einem zum Kathodenbereich (3) strömenden Zuluftstrom einerseits und einem aus dem Kathodenbereich (3) strömenden Abluftstrom andererseits durchströmt ist, und welche zumindest eine Wärmetauscherfunktion hat, und mit katalytischen Material zur thermischen Umsetzung von brennstoffhaltigem Gas,
**dadurch gekennzeichnet, dass**
eine erste Einheit (18) mit katalytischem Material in Strömungsrichtung des Zuluftstroms vor der wenigstens einen Vorrichtung (12,13,22) angeordnet ist, wobei der ersten Einheit (18) ein Abgas aus dem Anodenbereich (4) als brennstoffhaltiges Gas zuführbar ist, und dass eine zweite Einheit (19) mit katalytischem Material in Strömungsrichtung des Abluftstroms nach der wenigstens einen Vorrichtung (12,13,22) angeordnet ist.

2. Brennstoffzellensystem (1) nach Anspruch 1,
**dadurch gekennzeichnet, dass**
die wenigstens eine Vorrichtung als Wärmetauscher (12) ausgebildet ist, in welchem Wärme von der Zuluft auf die Abluft übergeht.

3. Brennstoffzellensystem (1) nach Anspruch 1 oder 2,
**dadurch gekennzeichnet, dass**
wenigstens der zwei Vorrichtungen vorhanden sind, wobei eine in Strömungsrichtung der Zuluft erste Vorrichtung als Wärmetauscher (12) ausgebildet ist, in welchem Wärme von der Zuluft auf die Abluft übergeht, und dass die in Strömungsrichtung der Zuluft letzte Vorrichtung vor dem Kathodenbereich (3) als Befeuchter (13) ausgebildet ist, in welchem Wasserdampf von der Abluft auf die Zuluft übergeht.

4. Brennstoffzellensystem (1) nach Anspruch 1,
**dadurch gekennzeichnet, dass**
die wenigstens eine Vorrichtung als Austauschvorrichtung (22) ausgebildet ist, in welcher Wärme von der Zuluft auf die Abluft und Wasserdampf von der Abluft auf die Zuluft übergeht.

5. Brennstoffzellensystem (1) nach 3 oder 4,
**dadurch gekennzeichnet, dass**
um den Befeuchter (13) oder die Austauschvorrichtung (22) eine Bypassleitung (14) mit einem steuerbar verschließbaren Strömungsquerschnitt angeordnet ist.

6. Brennstoffzellensystem (1) nach einem der Ansprüche 1 bis 5,
**dadurch gekennzeichnet, dass**
die erste Einheit (18) mit dem katalytischen Material zuluftseitig in die in Strömungsrichtung der Zuluft erste wenigstens eine Vorrichtung (12,22) integriert ist.

7. Brennstoffzellensystem (1) nach einem der Ansprüche 1 bis 6,
**dadurch gekennzeichnet, dass**
die zweite Einheit (19) mit dem katalytischen Material abluftseitig in die in Strömungsrichtung der Abluft letzte wenigstens eine Vorrichtung (12,22) integriert ist.

8. Brennstoffzellensystem (1) nach Anspruch 7,
**dadurch gekennzeichnet, dass**
das im Bereich des katalytischen Materials der zweiten Einheit (19), Mittel vorgesehen sind, durch welche der thermische Übergang von der Abluftseite auf die Zuluftseite erschwert ist.

9. Brennstoffzellensystem (1) nach einem der Ansprüche 1 bis 8,
**dadurch gekennzeichnet, dass**
der zweiten Einheit (19) mit dem katalytischen Material ein Brennstoff, insbesondere Wasserstoff, zuführbar ist.

10. Brennstoffzellensystem (1) nach einem der Ansprüche 1 bis 9,
**dadurch gekennzeichnet, dass**
das katalytische Material in Form einer Beschichtung in die Einheit (18,19) oder die wenigstens eine damit versehene Vorrichtung (12,22) eingebracht ist.

11. Brennstoffzellensystem (1) nach einem der Ansprüche 1 bis 10,
**dadurch gekennzeichnet, dass**
die wenigstens eine Vorrichtung (12,13,22) zumindest teilweise eine Wabenstruktur aufweist.

12. Brennstoffzellensystem (1) nach einem der Ansprüche 4 bis 11,
**dadurch gekennzeichnet, dass**
die Austauschvorrichtung (22) im wesentlichen im Gegenstrom durchströmt ist, wobei das katalytische Material der ersten Einheit (18) zuluftseitig in dem Bereich angeordnet ist, in dem die Zuluft und das Abgas in die Austauschvorrichtung (22) einströmen und in dem die Abluft aus der Austauschvorrichtung (22) ausströmt.

13. Brennstoffzellensystem (1) nach Anspruch 12,
**dadurch gekennzeichnet, dass**
das katalytische Material der zweiten Einheit (19) abluftseitig in dem Bereich angeordnet ist, in dem die Abluft aus der Austauschvorrichtung (22) ausströmt und in dem die Zuluft und das Abgas in die Austauschvorrichtung (22) einströmen.

14. Brennstoffzellensystem (1) nach einem der Ansprüche 1 bis 13,
**dadurch gekennzeichnet, dass**
die Zuluft über einen stromaufwärts der ersten wenigstens einen Vorrichtung (12,22) angeordneten Verdichter (6) gefördert ist, wobei der Verdichter (6) zumindest unterstützend durch eine Turbine (16) antreibbar ist, welche von der Abluft stromabwärts der letzten wenigstens einen Vorrichtung (12,22) durchströmt ist.

15. Brennstoffzellensystem (1) nach Anspruch 14,
**dadurch gekennzeichnet, dass**
der Verdichter (6) von einer elektrischen Maschine (17) antreibbar ist, wobei bei Leistungsüberschuss an der Turbine (16) die Turbine (16) die elektrische Maschine (17) generatorisch zur Erzeugung von elektrischer Leistung antreibt.

16. Verwendung einer Vorrichtung nach einem der Ansprüche 1 bis 15,
in einem Fortbewegungsmittel zur Erzeugung von elektrischer Leistung für den Antrieb und/oder elektrische Nebenverbraucher des Fortbewegungsmittels.

## Claims

1. Fuel cell system (1) comprising at least one fuel cell (2) having a cathode region (3) and an anode region (4) separated from one another by a polymer electrolyte membrane (5), further comprising at least one device (12, 13, 22) through which pass a supply air stream flowing to the cathode region (3) on the one hand and a discharge air stream flowing from the cathode region (3) on the other hand and which has at least one heat exchanger function, and further comprising catalytic material for the thermal conversion of fuel-containing gas, **characterised in that**
a first unit (18) with catalytic material is arranged upstream of the at least one device (12, 13, 22) in the direction of flow of the supply air stream, wherein an exhaust gas from the anode region (4) can be fed to the first unit (18) as a fuel-containing gas, and **in that** a second unit (19) with catalytic material is arranged downstream of the at least one device (12, 13, 22) in the direction of flow of the exhaust air stream.

2. Fuel cell system (1) according to claim 1,
**characterised in that**
the at least one device is designed as a heat exchanger (12) in which heat is transferred from the supply air to the exhaust air.

3. Fuel cell system (1) according to claim 1 or 2,
**characterised in that**
at least two of the devices are provided, wherein a device which is the first in the direction of flow of the supply air is designed as a heat exchanger (12) in which heat is transferred from the supply air to the exhaust air, and **in that** the device which is the last in the direction of flow of the supply air upstream of the cathode region (3) is designed as a humidifier (13) in which water vapour from the exhaust air is transferred to the supply air.

4. Fuel cell system (1) according to claim 1,
**characterised in that**
the at least one device is designed as an exchange device (22) in which heat is transferred from the supply air to the exhaust air and water vapour is transferred from the exhaust air to the supply air.

5. Fuel cell system (1) according to claim 3 or 4,
**characterised in that**
a bypass line (14) having a controllably closable flow cross-section is arranged around the humidifier (13) or the exchange device (22).

6. Fuel cell system (1) according to any of claims 1 to 5, **characterised in that**
the first unit (18) with the catalytic material is integrated on the supply air side into the at least one device (12, 22) which is the first in the direction of flow of the supply air.

7. Fuel cell system (1) according to any of claims 1 to 6, **characterised in that**
the second unit (19) with the catalytic material is integrated on the exhaust air side into the at least one device (12, 22) which is the last in the direction of flow of the exhaust air.

8. Fuel cell system (1) according to claim 7,
**characterised in that**
in the region of the catalytic material of the second unit (19), means are provided which make the transfer of heat from the exhaust air side to the supply air side more difficult.

9. Fuel cell system (1) according to any of claims 1 to 8, **characterised in that**
a fuel, in particular hydrogen, can be supplied to the second unit (19) with the catalytic material.

10. Fuel cell system (1) according to any of claims 1 to 9, **characterised in that**
the catalytic material is introduced into the unit (18, 19) or into the at least one device (12, 22) provided therewith in the form of a coating.

11. Fuel cell system (1) according to any of claims 1 to 10, **characterised in that**
the at least one device (12, 13, 22) at least partially has a honeycomb structure.

12. Fuel cell system (1) according to any of claims 4 to 11, **characterised in that**
the flow through the exchange device (22) is substantially a counterflow, wherein the catalytic material of the first unit (18) is arranged on the supply air side where the supply air and the exhaust gas flow into the exchange device (22) and where the exhaust air flows out of the exchange device (22).

13. Fuel cell system (1) according to claim 12,
**characterised in that**
the catalytic material of the second unit (19) is arranged on the exhaust air side in the region where the exhaust air flows out of the exchange device (22) and where the supply air and the exhaust gas flow into the exchange device (22).

14. Fuel cell system (1) according to any of claims 1 to 13, **characterised in that**
the supply air is delivered via a compressor (6) provided upstream of the at least one device (12, 22), wherein the compressor (6) can be driven at least in support by a turbine (16) through which the exhaust air flows downstream of the at least one device (12, 22).

15. Fuel cell system (1) according to claim 14,
**characterised in that**
the compressor (6) can be driven by an electric machine (17), wherein, if there is excess power at the turbine (16), the turbine (16) drives the electric machine (17) in a generator mode to generate electric power.

16. Use of a device according to any of claims 1 to 15,
in a locomotion means for the generation of electric power for the drive and/or for electric ancillary loads of the locomotion means.

## Revendications

1. Système de pile à combustible (1) comportant au moins une pile à combustible (2) laquelle présente une partie cathodique (3) et une partie anodique (4), lesquelles sont séparées l'une de l'autre par une membrane (5) électrolytique en polymère, et au moins un dispositif (12, 13, 22) qui est parcouru par un flux d'air entrant s'écoulant vers la partie cathodique (3) d'une part et, d'autre part, par un flux d'air sortant provenant de la partie cathodique (3), et qui a pour fonction au moins d'échanger la chaleur et, un matériau catalytique permettant la conversion thermique du gaz contenant du combustible, **caractérisé en ce qu'**une première unité (18) à matériau catalytique est placée avant le ou les dispositifs (12, 13, 22) dans le sens de l'écoulement du flux d'air entrant, un gaz sortant de la partie anodique (4) pouvant être amené à la première unité (18) en tant que gaz contenant du combustible et **en ce qu'**une seconde unité (19) à matériau catalytique est placée après le ou les dispositifs (12, 13, 22) dans le sens de l'écoulement du flux d'air sortant.

2. Système de pile à combustible (1) selon la revendication 1, **caractérisé en ce que** l'au moins un dispositif est conçu comme échangeur thermique (12), dans lequel la chaleur est transférée du flux d'air entrant au flux d'air sortant.

3. Système de pile à combustible (1) selon la revendication 1 ou 2, **caractérisé en ce que** les deux dispositifs sont présents, l'un étant conçu comme échangeur thermique (12) dans le sens de l'écoulement de l'air entrant, dans lequel la chaleur est transférée de l'air entrant à l'air sortant, et **en ce que** l'autre dispositif dans le sens de l'écoulement de l'air entrant avant la partie cathodique (3) est conçu comme humidificateur (13), dans lequel la vapeur d'eau est transférée de l'air sortant à l'air entrant.

4. Système de pile à combustible (1) selon la revendication 1, **caractérisé en ce que** l'au moins un dispositif est conçu comme dispositif d'échange (22), dans lequel la chaleur est transférée du flux d'air entrant au flux d'air sortant et la vapeur d'eau est transférée de l'air sortant à l'air entrant.

5. Système de pile à combustible (1) selon la revendication 3 ou la revendication 4, **caractérisé en ce qu'**autour de l'humidificateur (13) ou du dispositif d'échange (22) est placée une conduite de dérivation (14) dont la fermeture de la coupe transversale d'écoulement peut être commandée.

6. Système de piles à combustible (1) selon l'une quelconque des revendications 1 à 5, **caractérisé en ce que** la première unité (18) avec le matériau catalytique côté entrant est introduite dans l'au moins un premier dispositif (12, 22) dans le sens d'écoulement de l'air entrant.

7. Système de piles à combustible (1) selon l'une quelconque des revendications 1 à 6, **caractérisé en ce que** la seconde unité (19) avec le matériau catalytique côté sortant est introduite au moins dans l'autre dispositif (12, 22) dans le sens d'écoulement de l'air sortant.

8. Système de pile à combustible (1) selon la revendication 7, **caractérisé en ce que** dans la région du matériau catalytique de la seconde unité (19) il est prévu des moyens qui rendent difficile le transfert thermique du côté sortant au côté entrant.

9. Système à pile combustible (1) selon l'une quelconque des revendications 1 à 8, **caractérisé en ce qu'**un combustible, en particulier de l'hydrogène, est amené à la seconde unité (19) avec le matériau catalytique.

10. Système de piles à combustible (1) selon l'une quelconque des revendications 1 à 9, **caractérisé en ce que** le matériau catalytique sous forme d'une couche est introduite dans l'unité (18, 19) ou dans l'au moins un dispositif prévu (12, 22).

11. Système de pile à combustible (1) selon l'une quelconque des revendications 1 à 10, **caractérisé en ce que** l'au moins un dispositif (12, 13, 22) présente au moins partiellement une structure en nid d'abeilles.

12. Système de pile à combustible (1) selon l'une quelconque des revendications précédentes 4 à 11, **caractérisé en ce que** le dispositif d'échange (22) est parcouru essentiellement à contre-courant, le matériau catalytique de la première unité (18) étant disposé côté entrant dans la région où l'air entrant et le gaz pénètrent dans le dispositif d'échange (22) et où l'air sortant s'écoule du dispositif d'échange (22).

13. Système de pile à combustible (1) selon la revendication 12, **caractérisé en ce que** le matériau catalytique de la seconde unité (19) est disposé côté sortant dans la région où l'air sortant s'écoule du dispositif d'échange (22) et où l'air entrant pénètre dans le dispositif d'échange (22).

14. Système de pile à combustible (1) selon l'une quelconque des revendications 1 à 13, **caractérisé en ce que** l'air entrant est acheminé par un compresseur (6) disposé en amont de l'au moins un dispositif (12, 22), le compresseur (6) pouvant être entraîné au moins en plus par une turbine (16) laquelle est parcourue par l'air sortant en aval de l'au moins un dispositif (12, 22).

15. Système de pile à combustible (1) selon la revendication 14, **caractérisé en ce que** le compresseur (6) peut être entraîné par une machine électrique (17), en cas de puissance excédentaire de la turbine (16) la turbine (16) entraîne la machine électrique (17) au moyen d'un générateur permettant de produire de l'énergie électrique.

16. Utilisation d'un dispositif selon l'une quelconque des revendications 1 à 15, dans un moyen de locomotion permettant de produire de l'énergie électrique pour l'entraînement et/ou du consommateur auxiliaire électrique du moyen de locomotion.
